# EUROPEAN PATENT APPLICATION

(11) **EP 0 791 428 A1**
(43) Date of publication of application: **27.08.1997**
(21) Application number: 97500013.4
(22) Date of filing: 22.01.1997
(51) Int. Cl.: B23Q 16/10, B24B 5/42, B23Q 1/54

(54) **A workhead with an eccentric chuck for grinding crankshafts**

(30) Priority: 20.02.1996 ES 9600392
(71) Applicant: Danobat, S. Coop, 20870 Elgoibar (Guipuzcoa) (ES)
(72) Inventor: Diego Garamendi, Ricardo, 20870 Elgoibar (Guipuzcoa) (ES)

(57) **Abstract**

The workhead (1) has a drive spindle (2) for driving the eccentric chuck (5), and incorporates an automatic phase shifting (25) having a servo-motor (16) which is CNC-controlled. The crankshaft (6) is secured by its supports (6a) and rotates together with the spindle (2) as a journal (6b) is situated on the rotation axis (2) to be ground. The eccentric chuck (5) is coupled to a complementary chuck (4) which can be moved vertically in relation to the spindle (2) and the means for coupling the chuck (5) for the phase shifting take the form of two geared rings (26, 27) with a fine division, which can be separated by means of a hydraulic piston (29). The turn for the phase shifting (25) is transferred to the chuck (5) through an internal axle (15) housed in the drive spindle (2).

## Description

The present invention relates to a workhead in a grinding machine for grinding crankshafts or other parts having cylindrical elements on an eccentric shaft, and particularly to the coupling of the eccentric crankshaft chuck to the workhead and its phase shifting mechanism for grinding the various journals.

### PRIOR ART

The grinding of crankshafts, for example of automobiles, requires a grinder with grinding wheels where the journal to be ground is placed coaxially to the rotation axis of the drive spindle of the workhead. The crankshaft is secured at one of its end mounts co-axially on the chuck, but the chuck is coupled to the spindle eccentrically so that the distance between the axis of those crankshaft supports and the rotation axis of the drive spindle or 'half-stroke' is a given value for each crankshaft. The various journals of a crankshaft are out of phase with each other by a given angle and, in the case of an automobile, depending on the number cylinders, at phase angles of 60°, 70°, 90°, 120° or 180° in relation to the position of the crankshaft rotation axis.

To grind the various out-of-phase journals of a crankshaft without removing it from the machine, grinders for crankshafts or elements with cylindrical components on out-of-centre shafts have an eccentric chuck coupled through a chuck-holder to the drive spindle, the eccentric chuck having a mechanism to turn it around its own axis so that, on finishing the grinding of a journal, the crankshaft can be turned with the chuck until the axis of the following journal coincides with the spindle drive rotation axis, this turn called the phase shift.

In EP-076635, the crankshaft chuck is fixed to a second rotary spindle which is supported eccentrically by the first drive spindle so that the plate can turn to position a second journal co-axially to the drive spindle axis.

In EP-022145, an indexing head is fixed between the chuck and the workhead without having to remove the crankshaft. The indexing head is manually operated from the other side of the workhead under the control of electronic sensors.

Eccentric chucks are known which are coupled to the drive spindle, the phase shifting mechanism for machining a second journal being driven by an additional motor to which a cam mechanism is coupled with stops introduced at angle positions the same as the phase angles of the various journals to be ground. These stops have to be adjusted manually, involving long periods for adjusting the unit for machining each set of crankshafts, and they are susceptible to phase errors which are passed on, along with those of the cam movement, to the position of the journal axis in relation to the rotation axis. In addition, these manually controlled cam and stop mechanisms do not allow fine angle divisions to obtain small phase shifts such as 12° or 18° accurately.

A further known crankshaft chuck phase shift transmission mechanism is based on a meshing set whose intermediate element meshes with two others, and the intermediate space must be moved for the phase shift by a rocking action provided by springs pre-loading the meshing. This mechanism for transmitting the chuck phase shift leads to inaccuracies in the half-stroke, i.e. in the distance between the rotation axis and the crankshaft support axis, since angular mesh movements arise which mean that a further zero-set is necessary in both movements to disconnect and connect the meshing. The torsional rigidity of this known mechanism is low, because of the elasticity of the springs.

### DISCLOSURE OF THE INVENTION

The object of the present invention is workhead of a grinding machine provided with a crankshaft chuck eccentric to the spindle rotation axis of the workhead, and its coupling by an automatic phase shift mechanism for grinding the journals and other cylindrical surfaces which are axially phase shifted with respect to the component supports axis.

The workhead with a eccentric chuck which is the object of the invention comprises:
- a drive spindle that turns around a central horizontal rotation axis, a chuck-holder rigidly connected and co-axial to the spindle, a complementary chuck coupled to said chuck-holder which is able to slide transversally to the rotation axis so as to be situated eccentrically, and a crakshaft chuck which is concentric to the complementary chuck and able to move in rotation around the eccentric axis of the complementary chuck for the phase shifting, driven in its rotation by the complementary chuck while the component is ground;
- an internal axle housed in the spindle and co-axial to it for shifting the crankshaft, means to make it turn a phase angle in a controlled manner, and an device connected to the free end of the internal axle for transmitting the turning to the crankshaft chuck and shifting its phase;
- electronic means to control the angle turned by the internal axle for the phase shifting;
- a pair of separable geared rings which couple the crankshaft chuck to the complementary chuck to transmit the spindle rotation movement;
- elements to separate and link said geared rings, respectively associated with the complementary chuck and the crankshaft chuck, and
- guides for the complementary chuck on the chuck-holder for the vertical movement of the crankshaft chuck in relation to the fixed height of the rotation axis, and a device to regulate this movement for the establishment of the half-stroke between the component securing axis and the rotation axis.

The means for turning the internal axle for the control of the phase shift mean this can be done automatically with the help of the complementary geared rings and an electronically programmed servo-motor located above the spindle, and which transmits its rotation to the internal axle through the associated pulleys and toothed belt, said pulley being linked to the internal axle connected to its end to idle on bearings and coupled by means of a clutch to a brake which forms part of the internal axle, to disconnect the servo-motor during rotation for machining.

The unit transmitting the rotation of the internal axle to the crankshaft chuck for the phase shift is the cardan type joint connected through the same central housing of the spindle to the free end of the internal axle by means of a striated rod allowing the axial movement of the cardan ball-joint to compensate its lengthwise extension with the alteration of the chuck axis height relative to the spindle rotation axis during the phase shifting.

The advantage of the cardan transmission over other types is that the cardan has greater torsional rigidity and less play is created, while the problem created because its rotation shifts the length of its axial projection is solved in this invention with a connector linked to the cardan and fitting on to the striated rod so as to slide lengthwise, but which grips it when it turns.

The geared wheels coupling the chuck to the complementary chuck to transmit the rotation of the spindle to the component are divided into inter-dental spaces whose separation is extremely small so that very small angle phase changes are possible: in addition, a very accurate phase angle is obtained automatically, without removing the chuck and without manual operation or measurement of any sort because of the fine fit of the two geared elements which depend solely on the teething taking place, even though there may be an error in the angle turned by the because of the accumulated error of the rotation of the servo-motor, its transmission through the pulleys, the internal axle and the cardan itself.

This coupling of the chuck to the drive chuck-holder has the additional advantage over known systems that, for their separation and subsequent meshing, there is a single movement, only of the geared ring associated with the complementary chuck which is, in addition to its axial direction, provided by means of a hydraulic piston.

### DESCRIPTION OF THE DRAWINGS

FIG. 1 is a lengthwise cross-section view of the workhead with the eccentric chuck for grinding crankshafts which is the subject of the invention.

FIG. 2 is a lengthwise cross-section of the eccentric chuck and the chuck-holder in figure 1.

FIG. 3 is a face view of the back of the workhead in figure 1, showing the drive elements.

FIG. 4 is a lengthwise cross-section of the drive workhead along plane IV-IV in figure 3.

### PREFERRED EMBODIMENT OF THE INVENTION

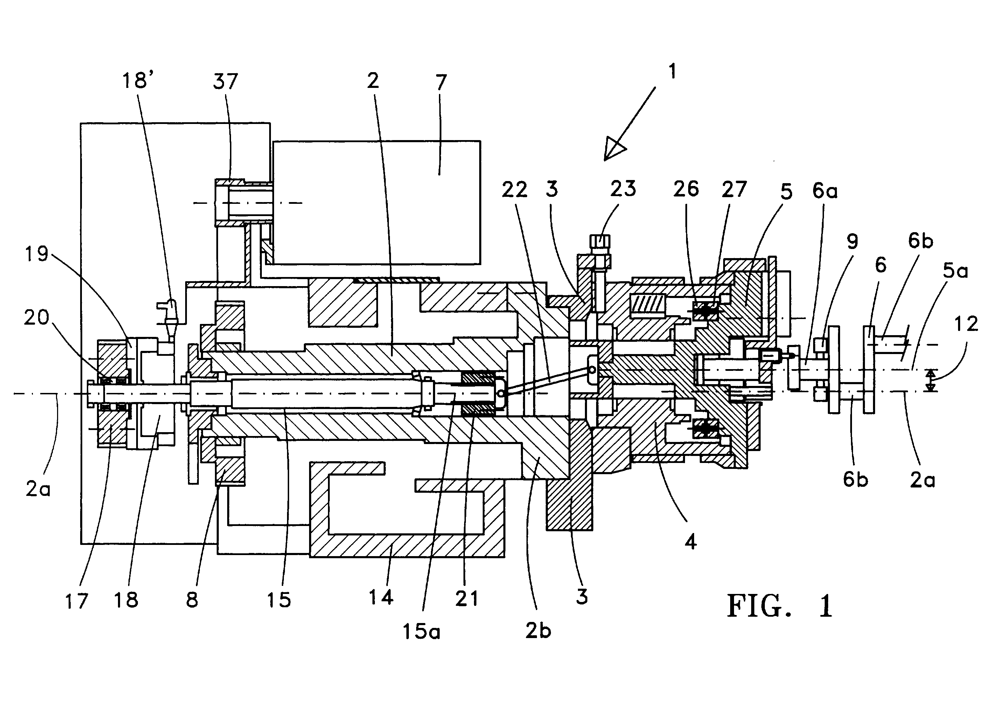

With reference to figures 1 - 4, the workhead 1 for the grinding of crankshafts which is the object of the invention is shown in figure 1, supported by the framing 14 of the grinder, with a crankshaft 6 attached to the chuck 5 by clamps 9. The axis 5a of chuck 5 coincides with the supports 6a of the crankshaft 6 and is off-centre with the rotation axis 2a of the drive spindle 2, which turns at the speed of the motor 7 and driven by pulleys 8 and 37 so that during grinding, the chuck-holder 3, plate 5, and the crankshaft 6 turn together with it.

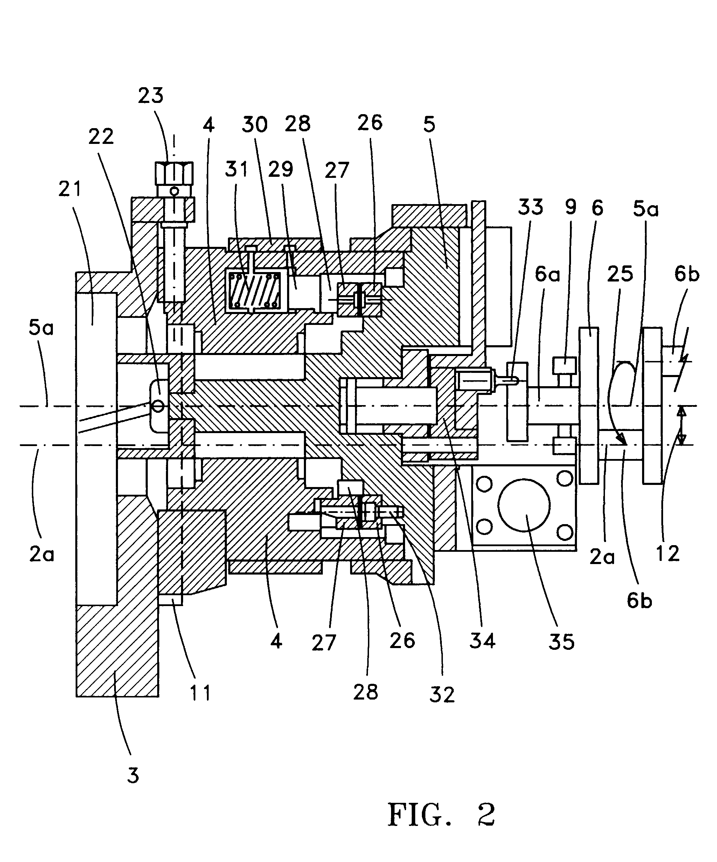

The chuck-holder 3 is connected rigidly to the spindle 2 with its snout 2b fitting into the housing 21 on the chuck-holder 3 shown in figure 2, the complementary chuck 4 is guided, transverse to the rotation axis 2a on the chuck-holder 3, by means of the guide 11 socketed to fix the half-stroke 12, and the eccentric chuck 5 is coupled to the complementary chuck 4 to be moved during rotation and, at the same time, for the automatic phase shifting prior to machining.

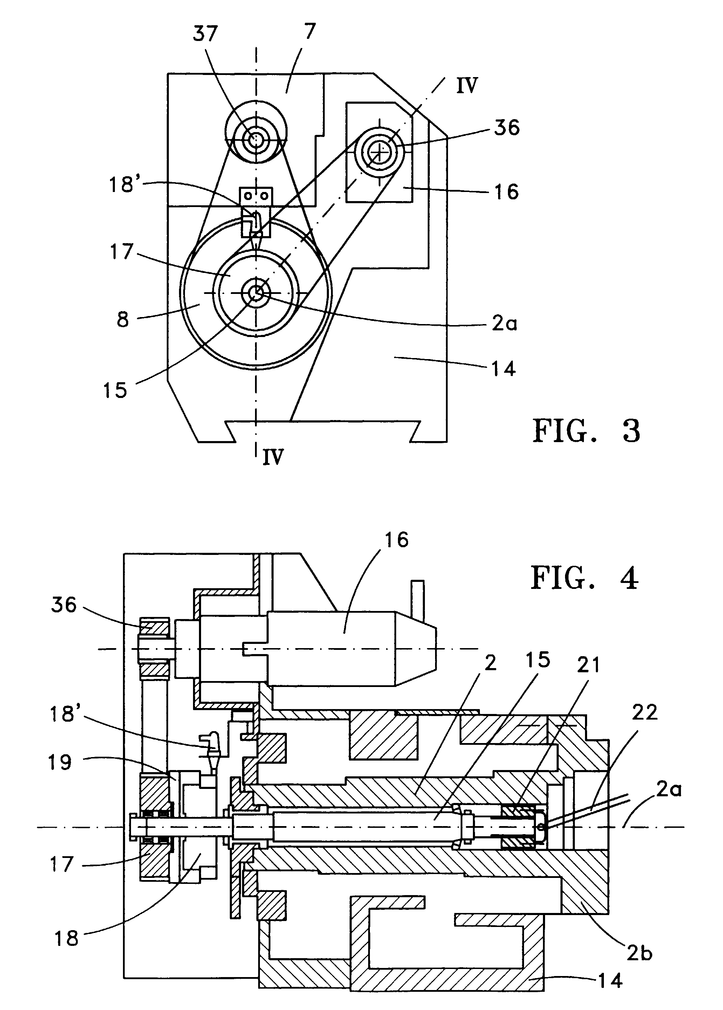

The internal axle 15 of the spindle 2 housed inside co-axially is turned in a controlled manner by a servo-motor 16 which is operated by CNC as shown in figures 3 and 4 and driven by pulleys 17 and 36 at a speed of approximately 20 r/min: pulley 17 is connected to an electro-magnetic brake 18, 18', through a clutch 19 and coupled to the internal axle 15 through the bearings 20 so as to idle and remain disconnected from it during the machining rotation. This disconnection is necessary because the spindle 2 rotates at approximately 300 r/min during machining so that the rotation motor 7 must not interfere with the servo-motor 16, which operates only in the phase shift of the chuck 5.

The end of the internal axle 15 is a striated rod 15a to which a cardan transmitter 22 is connected to transmit its rotation to the chuck 5, independent of the spindle 2, the chuck-holder 3 and the complementary chuck 4, so performing the phase shift for the machining of another journal 6b on another phase. The connection of the cardan 22 to the striated rod 15a is through a slip connector 21 fitted on said striated rod 15a to allow the arm of the cardan 22 to extend in either direction from the central housing of the spindle 2, but radially connected to the striated rod 15a as it turns.

To make the journal axis to be machined coincide with the rotation axis 2a which is common to the spindle 2 and the chuck-holder 3, the complementary chuck 4 shown in figure 2 has a protruding vertical guide 11 of rectangular cross-section which fits and slips into an associated insert guide on the chuck-holder 3, which has, at the top and supported by it, a screw 23 on said guide 11, which is used to adjust the half-stroke 12 of the crankshaft being machined.

The phase shifting 25 to move another journal 6b to the rotation shaft 2a - in the example in figure 2 the phase difference shown equals an angle of 180° - is attained accurately by multiple intervals of 3° by the coupling of geared rings 26 and 27 which are situated in a housing 28 between the superimposed faces of the complementary chuck 4 and the chuck 5. The diameter of the geared rings 26 and 27 is approximately two thirds of the diameter of the chuck 5 and the interval between teeth is 3°, machined to an inter-dental tolerance of ± 0.001°, the maximum possible phase angle error. The ring 26 is screwed 32 to the chuck 5 and the other ring 27 can be moved toward the complementary chuck 4 inside said housing. The movable ring 27 is disconnected by means of a piston 29 which is driven by a hydraulic feed 30 while the meshing pressure between the two rings 26 and 27 for drive of the chuck 5 during rotation for the machining is maintained by a helical spring 31 connected to the hydraulic piston itself 29.

To position the crankshaft 6 on the chuck 5, the latter has a guide rod 33 which emerges from its front and enters the end of the crankshaft 6 at a point off-centre from the axis of the crankshaft supports 6a, its position in the axial direction being adjusted by means of a known hydraulic element 34 which moves said guide rod 33. The crankshaft 6 is secured to the chuck 5 in this position by means of a known hydraulic device 35 with clamps 9 that attach the support 6 of the crankshaft at two diametrically opposed points.

## Claims

1. A workhead with an eccentric chuck for grinding crankshafts (6) or other off-centre cylindrical elements where the eccentric chuck (5) is coupled with the drive spindle (2) of the workhead (1) through a complementary chuck (4) and a chuck-holder (3), said spindle (2) rotates around a horizontal axis (2a) to grind an axially coincident journal (6b), the crankshaft (6) being secured to the eccentric chuck (5) so that it is aligned with the chuck axis (5a), and the workhead (1) has means (15,16,17,22,26, 27,29,30) for turning (25) the eccentric chuck (5) independently of the spindle (2) an angle in order to shift the phase of the chuck (5) relative to the spindle rotation axis (2a), and means (11, 23) for the vertical displacement of the chuck (5) relative to the rotation axis (2a) and for regulating the resultant half-stroke (12) between the rotation axis (2a) and the crankshaft axis (5a),
characterized in that
- the phase shifting (25) is automatic and controlled, without removing the chuck (5) and without subsequent adjustments, by means of a CNC-drive servo-motor (16);
- the means (15,16,17,22,26,27,29,30) for turning the eccentric chuck (5) for the phase shifting (25) comprise, in addition to said servo-motor (16) and its control, an internal axle (15) housed in the spindle (2) which is turned by a set of pulleys (17,36) and a cardan transmission (22) which connects the free end (15a) of the internal axle (15) to the chuck (5);
- the chuck (5) is driven by the complementary (4) while the spindle (2) turns, thanks to a coupling of two geared rings (26, 27) housed inside the superimposed faces of the two chucks (4, 5) which are, in turn, separable for the phase shifting (25) turning by means of a hydraulic piston (29) which moves one of them.

2. The workhead with an eccentric chuck of claim 1, wherein said geared rings (26, 27) for the phase shift (25) are divided into interdental spaces of a small angle to obtain an accurate phase shift which is, in turn, of a value, such as 3°, which is a common divider of the out-of-phase angles of an automobile crankshaft.

3. The workhead with an eccentric chuck of claim 1, wherein said internal axle (15) has a striated rod (15a) at its free end to allow the lengthwise extension of the cardan (22) during rotation.

4. A workhead with an eccentric chuck of claim 1, wherein the pulley (17) for driving the internal axle (15) is coupled to an electro-magnetic brake (18 18') by means of a clutch (19) for disconnection while the spindle is rotating (2).
